# FASCICULE DE BREVET EUROPEEN

(11) **EP 2 297 743 B1**
(45) Date de publication et mention de la délivrance du brevet: **03.09.2014**
(21) Numéro de dépôt: 09772715.0
(22) Date de dépôt: 10.06.2009
(51) Int. Cl.: G21C 3/32, G21C 3/322, G21C 3/33

(54) **EMBOUT INFÉRIEUR D'ASSEMBLAGE DE COMBUSTIBLE NUCLÉAIRE**
FUSSSTÜCK FÜR KERNBRENNSTABBÜNDEL
NUCLEAR FUEL ASSEMBLY BOTTOM NOZZLE

(30) Priorité: 11.06.2008 FR 0853881
(43) Date de publication de la demande: 23.03.2011
(73) Titulaire: Areva NP, 92400 Courbevoie (FR)
(72) Inventeur: ROBIN, Jean-Pierre, F-69003 Lyon (FR)
(74) Mandataire: Domenego, Bertrand
(86) Numéro de dépôt international: PCT/FR2009/051092
(87) Numéro de publication internationale: WO 2010/001033

(56) Documents cités:
- JP-A- 6 003 470
- JP-A- 8 094 783
- US-A- 4 684 495
- US-A- 5 867 551
- DATABASE WPI Week 198420 Thomson Scientific, London, GB; AN 1984-124505 XP002515416 -& JP 59 061798 A (MITSUBISHI GENSINEN) 9 avril 1984 (1984-04-09)

## Description

La présente invention concerne un embout inférieur d'assemblage de combustible nucléaire, du type comprenant une plaque ajourée pour permettre le passage d'eau au travers de celle-ci, l'embout possédant des faces latérales, et au moins un élément anti-débris disposé sur une face latérale pour bloquer des débris susceptibles de passer entre l'embout inférieur et un autre embout inférieur adjacent.

Un assemblage de combustible nucléaire pour réacteur à eau sous pression (PWR), comprend classiquement un faisceau de crayons de combustible nucléaire et une armature, l'armature comprenant un embout inférieur, un embout supérieur, des tubes-guides reliant l'embout inférieur à l'embout supérieur, et des grilles de maintien fixées sur les tubes-guides. Les crayons s'étendent entre l'embout inférieur et l'embout supérieur, et au travers des grilles qui les maintiennent sur l'armature.

En fonctionnement, l'assemblage est disposé dans un réacteur nucléaire de sorte que les crayons s'étendent verticalement, et de l'eau s'écoule à grande vitesse le long des crayons des assemblages de combustible nucléaire, en passant au travers de l'embout inférieur et de l'embout supérieur. L'eau sert de fluide caloporteur pour les échanges de chaleur, et de modérateur pour la réaction nucléaire.

Il existe un risque que des débris transportés par l'eau endommagent les crayons de l'assemblage de combustible et imposent un arrêt du réacteur en vue de changer un crayon ou l'assemblage entier. Or les assemblages sont onéreux, et l'arrêt d'un réacteur coûte cher à l'exploitant. Pour limiter ce risque, l'embout inférieur a entre autres pour fonction de filtrer les débris pour empêcher qu'ils ne passent au travers de l'embout inférieur.

Néanmoins, il subsiste un risque que des débris passent entre deux embouts inférieurs de deux assemblages disposés côte à côte dans le réacteur.

JP 6003470 décrit un embout inférieur du type précité, comprenant un élément anti-débris disposé sur une face latérale de l'embout, l'élément anti-débris étant réalisé en un alliage à mémoire de forme de façon que l'élément anti-débris fait saillie de la face latérale à partir d'une température proche de la température de fonctionnement du réacteur (indiquée comme étant 300°C) pour filtrer les débris, et ne fait pas saillie de la face latérale au-dessous de cette température de fonctionnement pour faciliter l'insertion ou l'extraction de l'assemblage respectivement dans ou hors du coeur du réacteur.

Cependant, cet embout inférieur ne permet pas de filtrer les débris passant entre les assemblages pendant les phases de démarrage et d'arrêt du réacteur, pendant lesquelles la température du réacteur est très inférieure à la température de fonctionnement, alors même que ces phases sont critiques. Les phases de démarrage sont notamment critiques du fait que les débris peuvent être dus à des manipulations effectuées pendant l'arrêt du réacteur, avant son redémarrage.

Un but de l'invention est de prévoir un embout inférieur d'assemblage de combustible nucléaire permettant un blocage efficace des débris tout en facilitant l'installation de l'assemblage à l'intérieur du réacteur.

A cet effet, l'invention propose un embout inférieur du type précité, caractérisé en ce que, à l'état libre, le ou chaque élément anti-débris fait saillie en permanence de la face latérale sur laquelle il est disposé, le ou chaque élément anti-débris étant déformable élastiquement de façon à se rétracter en direction de la face latérale en cas d'effort exercé sur l'élément anti-débris en direction de la face latérale, dans une gorge ménagée dans la face latérale de façon que l'élément anti-débris se rétracte dans la gorge en cas d'effort exercé sur l'élément anti-débris en direction de la face latérale .

Selon d'autres modes de réalisation, l'embout inférieur comprend une ou plusieurs des caractéristiques suivantes, prises isolément ou selon toutes les combinaisons techniquement possibles :
- l'élément anti-débris est allongé et possède deux portions latérales en appui sur la face latérale et une portion centrale en saillie de la face latérale, les portions latérales s'écartant l'une de l'autre en cas d'effort exercé sur l'élément anti-débris en direction de la face latérale ;
- les portions latérales sont en appui sur un fond de la gorge de largeur plus grande que la distance entre les bords libres des portions latérales de l'élément anti-débris à l'état libre, la portion centrale faisant saillie au travers d'une ouverture de la gorge débouchant sur la face latérale.
- l'ouverture possède une largeur inférieure à ladite distance entre les bords libres des portions latérales de l'élément anti-débris à l'état libre ;
- la gorge est définie par une rainure ménagée dans la face latérale et formant le fond de la gorge et au moins un élément de retenue s'étendant en porte-à-faux à partir d'un bord de la rainure, le bord libre de l'élément de retenue délimitant l'ouverture ;
- il comprend deux éléments de retenue s'étendant en porte-à-faux l'un vers l'autre à partir des bords opposés de la rainure et délimitant l'ouverture entre leurs bords libres ;
- il comprend une série d'éléments de retenue espacés mutuellement et répartis le long d'une portion latérale dans le sens de la longueur de l'élément anti-débris, chaque élément de retenue maintenant la portion latérale en appui sur la face latérale et permettant un glissement de la portion latérale sur la face latérale ;
- une portion latérale comprend sur son bord libre des encoches dans lesquels sont reçus les éléments de retenue assurant le maintien de la portion latérale sur la face latérale ;
- l'élément anti-débris comprend au moins une patte plate prolongeant une portion latérale dans le sens de la longueur de l'élément anti-débris et engagée sous un élément de retenue prévu pour maintenir la portion latérale en appui sur la face latérale tout en permettant un glissement de la portion latérale sur la face latérale ; et
- le ou chaque élément anti-débris comprend des orifices de circulation d'eau au travers de l'élément anti-débris.

L'invention concerne également un assemblage de combustible nucléaire comprenant un faisceau de crayons de combustible nucléaire et une ossature de maintien des crayons, l'ossature comprenant un embout supérieur et un embout inférieur entre lesquels s'étendent les crayons, l'embout inférieur étant un embout inférieur tel que défini ci-dessus.

L'invention et ses avantages seront mieux compris à la lecture de la description qui va suivre, donnée uniquement à titre d'exemple, et faite en référence aux dessins annexés, sur lesquels :
- la Figure 1 est une vue schématique de côté de deux assemblages de combustible nucléaire munis d'embouts inférieurs comprenant des éléments anti-débris conformément à l'invention ;
- la Figure 2 est une vue agrandie des embouts inférieurs des assemblages de la Figure 1 ;
- la Figure 3 est une vue partielle en perspective d'un des embouts inférieurs de la Figure 2 ;
- les Figures 4 et 5 sont des vues en coupe de l'embout inférieur selon IV-IV sur la Figure 3, illustrant un élément anti-débris dans deux configurations différentes ;
- les Figures 6 et 7 sont des vues analogues à celle de la Figure 3 et illustrant d'autres modes de réalisation d'embout inférieur ; et
- les Figures 8 et 9 sont des vues respectivement partielle en perspective et en coupe transversale d'un élément anti-débris selon une variante.

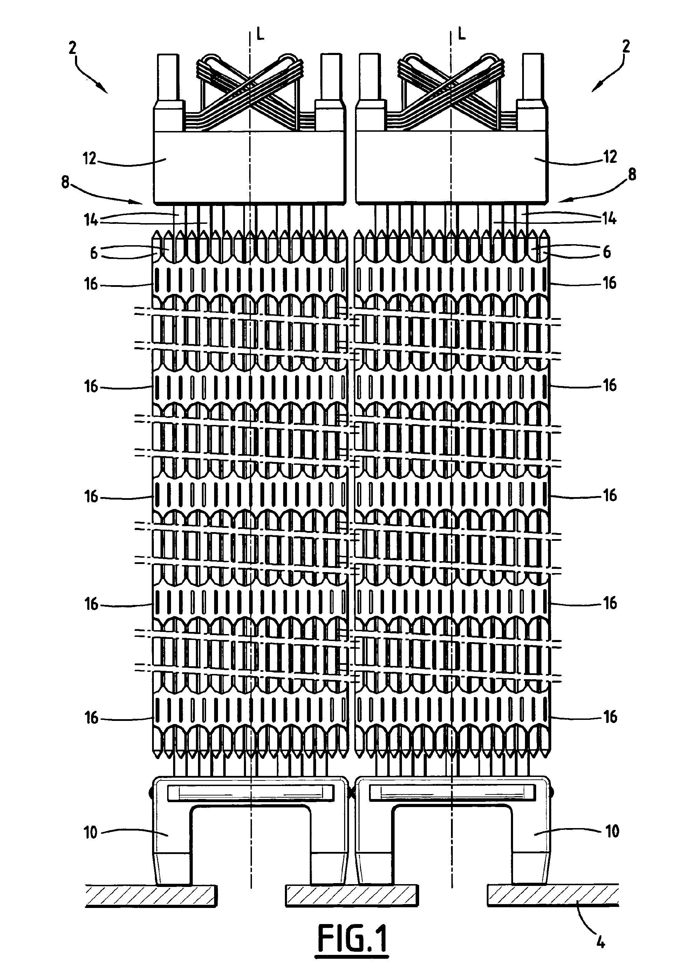

La Figure 1 représente deux assemblages 2 de combustible nucléaire identiques posés côte à côte sur la plaque inférieure 4 du coeur d'un réacteur nucléaire à eau pressurisée (PWR).

Chaque assemblage 2 est allongé suivant un axe longitudinal L qui s'étend sensiblement verticalement lorsque l'assemblage 2 est disposé dans le coeur du réacteur. Par la suite, les termes « haut » et « bas » s'entendent par référence à la position de l'assemblage 2 dans le réacteur.

Chaque assemblage 2 comprend un faisceau de crayons 6 de combustible nucléaire et une ossature 8 de maintien des crayons 6.

Chaque crayon 6 comprend de manière classique une gaine tubulaire remplie de pastilles de combustible nucléaire.

L'ossature 8 comprend un embout inférieur 10, un embout supérieur 12, des tubes-guides 14 et des grilles 16 de maintien.

L'embout inférieur 10 et l'embout supérieur 12 sont espacés suivant l'axe L. Les tubes-guides 14 s'étendent entre les embouts 10, 12 et relient les embouts 10, 12 entre eux. Les grilles 16 sont fixées sur les tubes-guides 14 et réparties entre les embouts 10, 12.

Les crayons 6 s'étendent parallèlement à l'axe L au travers des grilles 16 qui assurent le maintien longitudinal et transversal des crayons 6.

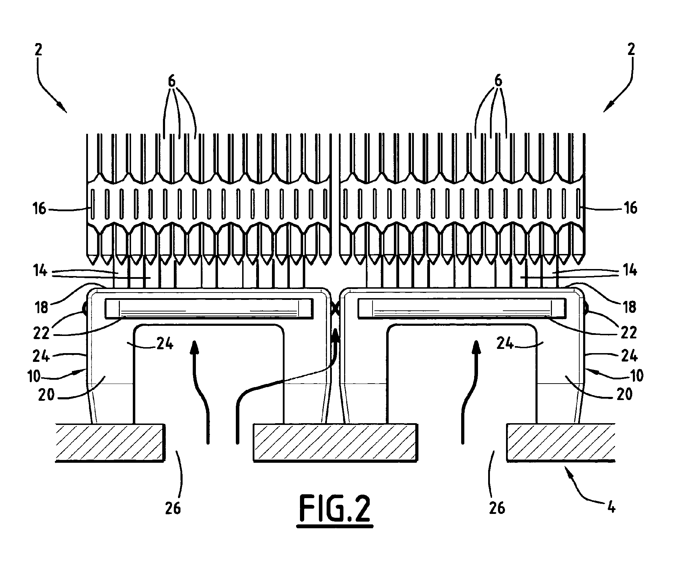

Tel que représenté sur la Figure 2, chaque embout inférieur 10 comprend une plaque 18 de filtrage, des pieds 20 d'appui, et des éléments anti-débris 22 rapportés et disposés sur des faces latérales 24 de l'embout inférieur 10.

La plaque 18 s'étend transversalement à l'axe L. Elle présente par exemple un profil polygonal, ici un profil carré. En variante, elle présente un profil hexagonal. Les pieds 20 s'étendent vers le bas à partir des coins de la plaque 18. L'embout inférieur 10 est en appui sur la plaque inférieure 4 par l'intermédiaire des pieds 20.

Chaque élément anti-débris 22 fait saillie de la face latérale 24 sur laquelle il est monté.

La plaque inférieure 4 est munie d'orifices 26 d'arrivée d'eau. Au moins un orifice 26 débouche sous l'embout inférieur 10 de chaque assemblage 2.

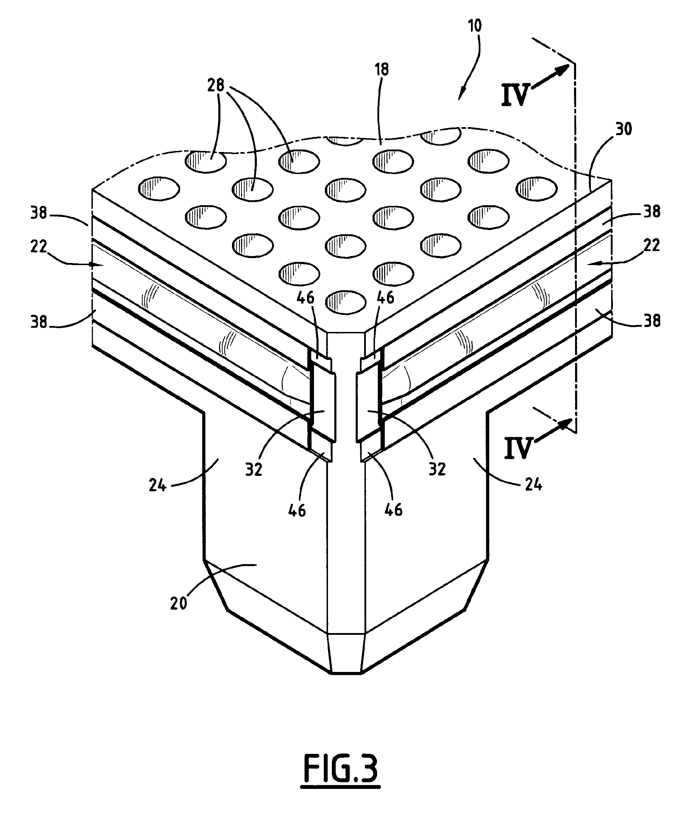

Tel que représenté sur la Figure 3, la plaque 18 est ajourée pour permettre la circulation d'eau au travers de celle-ci. A cet effet, la plaque 18 comprend par exemple une pluralité de canaux 28 traversant la plaque 18 de part en part.

Chaque élément anti-débris 22 se présente sous la forme d'une lame élastique allongée et s'étendant parallèlement à l'arête 30 délimitant le bord supérieur de la face latérale 24.

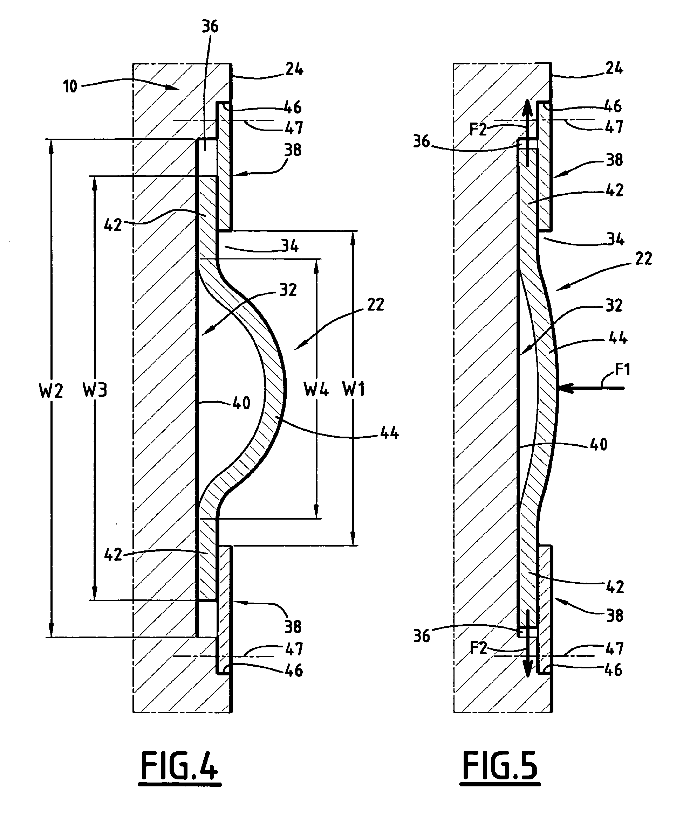

Les Figures 4 et 5 sont des vues en coupe selon IV-IV sur la Figure 3, sur lesquelles l'élément anti-débris 22 est représenté respectivement à l'état libre et dans un état comprimé.

Tel que représenté sur la Figure 4, l'élément anti-débris 22 est reçu dans une gorge 32 définie dans la face latérale 24, et fait saillie de la face latérale 24 au travers d'une ouverture 34 de la gorge 32 débouchant sur la face latérale 24.

La gorge 32 est définie par une rainure 36 allongée ménagée dans la face latérale 24 et des éléments de retenue 38 s'étendant à partir des bords opposés de la rainure 36 en direction l'un de l'autre, et conférant à la gorge 32 une section en T.

L'ouverture 34 est définie entre les bords libres des éléments de retenue 38. Elle possède une largeur W1 moins large que celle W2 du fond 40 de la gorge 32. Le fond 40 est plat et parallèle à la face latérale 24.

L'élément anti-débris 22 présente une section transversale en forme de chapeau, et comprend deux portions latérales 42 plates et une portion centrale 44 bombée faisant saillie de la face latérale 24.

Les portions latérales 42 sont reçues dans la gorge 32, dans les espaces latéraux délimitant les barres de la section en T définis entre le fond 40 et les éléments de retenue 38.

La largeur W3 de l'élément anti-débris 22 prise entre les bords libres des portions latérales 42 est inférieure à celle W2 du fond 40 et supérieure à celle W1 de l'ouverture 34. Il en résulte que l'élément anti-débris 22 est retenu transversalement à sa longueur dans la gorge 32.

La portion centrale 44 possède une largeur W4 inférieure à celle W1 de l'ouverture 34. La portion centrale 44 est bombée de façon à faire saillie de la face latérale 24 au travers de l'ouverture 34 à l'état libre de l'élément anti-débris 22.

La portion centrale 44 fait saillie en permanence de la face latérale 24 à l'état libre de l'élément anti-débris 22, quelle que soit la température, plus particulièrement dans le domaine des températures rencontrées dans les réacteurs nucléaires pendant les phases de fonctionnement normal et de production d'énergie, les phases d'arrêt, et les phases transitoires de démarrage et d'arrêt. Ce domaine de température est généralement compris entre la température ambiante, soit environ 20°C, et environ 350°C.

Les éléments de retenue 38 sont reçus dans des dégagements 46 ménagés dans la face latérale 24 le long de la rainure 36, de sorte que les éléments de retenue 38 sont de niveau avec la face latérale 24.

Les éléments de retenue 38 sont fixés par exemple à l'aide d'organes de fixation mécanique 47 tels que des vis, des rivets..., schématisés par des traits mixtes. En variante ou en option, les éléments de retenue 38 sont fixés sur la face latérale 24 par soudage.

Dans l'exemple illustré, chaque élément de retenue 38 se présente sous la forme d'une barrette allongée continue s'étendant sur la majorité de la longueur de la portion latérale 42 qu'il recouvre. En variante, un élément de retenue 38 est remplacé par une pluralité d'éléments de retenue espacés et répartis le long de l'élément anti-débris 22.

Tel que représenté sur la Figure 5, l'élément anti-débris 22 est adapté pour se déformer élastiquement et se rétracter dans la gorge 32 en cas d'effort appliqué sur la portion centrale 44 et dirigé vers la face latérale 24, comme illustré par la flèche F1 sur la Figure 5.

Dans ce cas, l'élément anti-débris 22 se déforme élastiquement par écrasement de la portion centrale 44 et écartement mutuel des portions latérales 42 et glissement de celles-ci sur le fond 40, comme illustré par les flèches F2 sur la Figure 5.

En fonctionnement, en référence à la Figure 2, de l'eau est injectée par les orifices 26, et circule dans le coeur du réacteur du bas vers le haut, au travers et entre les assemblages 2. L'eau est injectée sous les embouts inférieurs 10. Elle circule au travers des plaques 18 et entre les crayons 6 de chaque assemblage 2. Elle circule également entre les assemblages 2, en passant au travers des passages définis entre les faces latérales 24 adjacentes des embouts inférieurs 10 de chaque paire d'assemblages 2 adjacents.

L'eau sert de fluide modérateur pour modérer la réaction nucléaire, et de fluide caloporteur pour prélever la chaleur créée dans les crayons 6 du fait de la réaction nucléaire.

La plaque 18 de chaque embout inférieur 10 laisse passer l'eau qui circule dans le réacteur et bloque d'éventuels débris qui seraient présents dans l'eau.

Les éléments anti-débris 22 disposés sur les faces latérales 24 bloquent les débris éventuellement présents dans le flux d'eau passant entre les assemblages 2. Plus précisément, les éléments anti-débris 22 des deux faces latérales 24 en regard des embouts inférieurs 10 réduisent la largeur du passage défini entre ces deux faces latérales 24, de façon à bloquer d'éventuels débris.

Les éléments anti-débris 22 faisant à l'état libre saillie des faces latérales 24 en permanence permettent de bloquer les débris transportés par le flux d'eau s'écoulant entre les assemblages dans toutes les phases de fonctionnement du réacteur, et en particulier pendant les phases transitoires de démarrage et d'arrêt.

Pour extraire un assemblage 2 du réacteur ou l'introduire dans le réacteur, on utilise un grappin qui saisit l'assemblage 2 par son embout supérieur 12. Le risque lié à ce genre d'opération est que l'embout inférieur 10 touche un crayon 6 ou une grille 16 d'un autre assemblage 2 adjacent dans le coeur du réacteur, et provoque un endommagement de l'assemblage manipulé ou d'un des assemblages adjacents en créant éventuellement des débris. Les éléments anti-débris 22 aptes à se rétracter lorsque l'on appuie dessus limitent ce risque lors des manutentions, ils permettent de plus d'assurer un meilleur guidage de l'assemblage lors de son insertion ou de son extraction du coeur du réacteur. Du fait de leur élasticité, ils retrouvent ensuite leur configuration initiale de blocage des débris.

Les éléments anti-débris 22 sont de préférence réalisés en matériaux à haute limite élastique comme par exemple les superalliages à base nickel ou à base fer, les alliages au titane ou encore certains aciers inoxydables à durcissement structural par exemple ceux définis par les normes AMS (Aerospace Material Spécification) 5629 et AMS 5643.

Dans l'exemple illustré, les éléments de retenue 38 sont rapportés et fixés sur les faces latérales de l'embout inférieur 10. Dans une variante non représentée, les éléments de retenus sont venus de matière avec la face latérale 24, une gorge 32 étant par exemple usinée dans la face latérale 24 à l'aide d'une fraise en T.

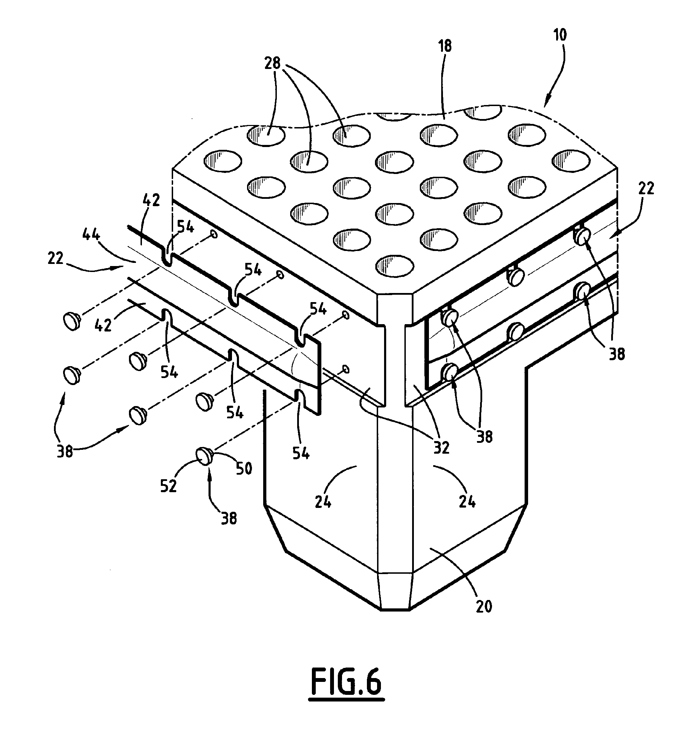

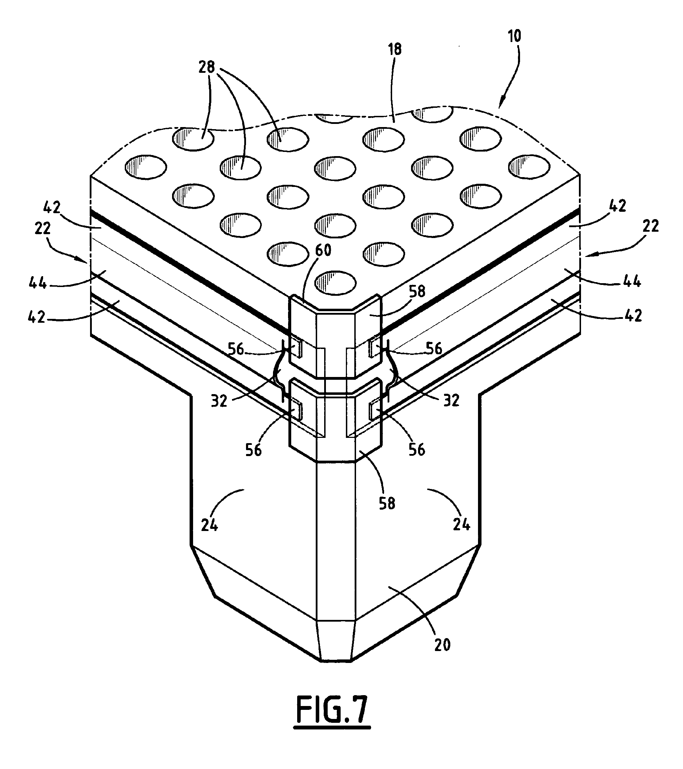

Les modes de réalisation des Figures 6 et 7 diffèrent du mode de réalisation précédent par la forme des éléments de retenue.

Dans le mode de réalisation de la Figure 6, l'embout inférieur 10 comprend plusieurs éléments de retenue 38 espacés et répartis le long de chaque portion latérale 42 de chaque élément anti-débris 22.

Chaque élément de retenue 38 comprend une base 50 de fixation de l'élément de retenue 38 sur le fond 40 de la gorge 32, et une tête 52 en forme de disque plus large que la base 50.

Chaque portion latérale 42 comprend une pluralité d'encoches 54 de réception d'une base 50 d'un élément de retenue 38 réparties le long du bord libre de la portion latérale 42. Chaque encoche 54 débouche sur le bord libre de la portion latérale 42. Chaque encoche 54 est suffisamment large pour recevoir la base 50 d'un élément de retenue 38, mais trop étroite pour permettre le passage de la tête 52 de cet élément de retenue 38.

Chaque encoche 54 s'étend vers l'intérieur de l'élément anti-débris 22 de façon à permettre l'écartement des portions latérales 42 lors de l'écrasement de la portion centrale 44 vers le fond 40 de la gorge 32.

Dans le mode de réalisation de la Figure 7, chaque élément anti-débris 22 est retenu uniquement à ses extrémités.

Pour ce faire, chaque portion latérale 42 d'un élément anti-débris 22 est munie d'une extension 56 plate prolongeant la portion latérale 42 dans le sens de la longueur de l'élément anti-débris 22, et des éléments de retenue 38 sont prévus sous la forme de plaques de coin 58 fixées dans des dégagements 60 prévus sur les faces latérales 24 de l'embout inférieur 10, de façon à recouvrir les extensions 56.

Chaque plaque de coin 58 recouvre un coin l'embout inférieur 10 et sert à la fixation de deux éléments anti-débris 22 disposés sur deux faces latérales adjacentes 24 de l'embout inférieur 10.

Dans une variante, deux plaques de coin 58 disposées sur un même coin sont remplacées par une seule plaque de coin. En variante ou en option, une plaque de coin 58 est remplacée par deux plaques servant chacune à la fixation d'un élément anti-débris 22.

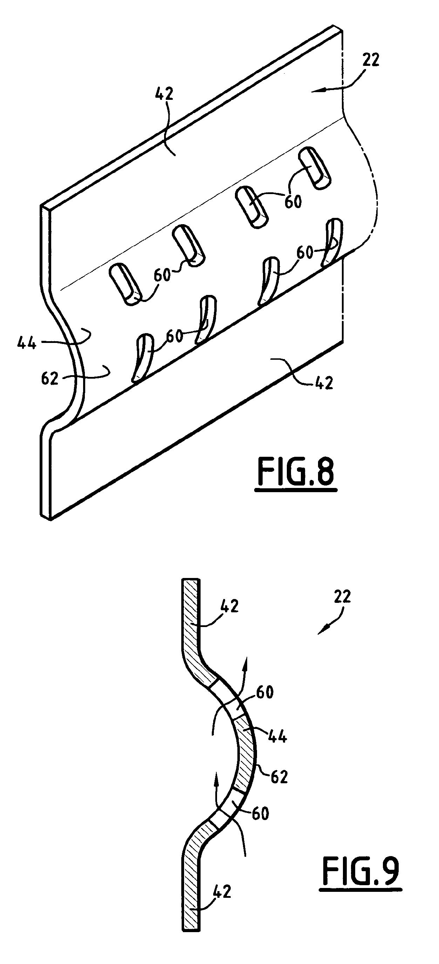

Dans la variante représentée aux Figures 8 et 9, l'élément anti-débris 22 diffère de celui de la variante des Figures 3 à 5 en ce qu'il comprend des orifices 60 de circulation d'eau au travers de l'élément anti-débris 22, afin d'offrir moins de résistance à l'écoulement de l'eau et de permettre le refroidissement des crayons de combustible 6 situés en périphérie des assemblages de combustible 2. Les orifices 60 sont ménagés dans la partie centrale 44 en étant répartis le long de celle-ci.

Dans l'exemple illustré, l'élément anti-débris 22 comprend une série d'orifices 60 inférieurs ménagés dans la portion latérale de la partie centrale 44 adjacente à la partie latérale 42 inférieure, et une série d'orifices 60 supérieurs ménagés dans la portion latérale de la partie centrale 44 adjacente à la partie latérale 42 supérieure.

Les orifices 60 inférieurs sont situés entre le sommet 62 de la portion centrale 44 et la portion latérale 42 inférieure. Les orifices 60 supérieurs sont situés entre le sommet 62 et la portion latérale 42 supérieure.

Tel qu'illustré sur la Figure 9, en fonctionnement, de l'eau circule au travers de l'élément anti-débris 22 en entrant sous l'élément anti-débris 22 par les orifices 60 inférieurs, et en ressortant par les orifices 60 supérieurs.

Pour assurer une bonne circulation de l'eau, chaque orifice 60 inférieur est disposé en regard d'un orifice 60 supérieur le long de l'élément anti-débris 22.

Tel que représenté sur la Figure 8, les orifices 60 présente une forme oblongue allongée transversalement à l'élément anti-débris 22. En variante ou en option, les orifices sont oblongs et allongés dans le sens de la longueur de l'élément anti-débris 22 ou en diagonale par rapport à l'écoulement. Les orifices 60 peuvent présenter d'autres formes géométriques et/ou être disposés en quinconce ou encore être disposés selon une seule série. L'élément anti-débris 22 peut aussi présenter différentes combinaisons d'orifices 60 de forme et de disposition différentes.

L'invention n'est pas limitée aux modes de réalisation illustrés. Il est par exemple possible de combiner les modes de réalisation des Figures 3, 6 et 7 pour prévoir des éléments de retenue de différents types ou des éléments anti-débris 22 en plusieurs parties. Il est également possible de ne disposer d'éléments anti-débris 22 que sur par exemple deux faces latérale 24 de l'embout inférieur 10, les deux faces latérales en vis-à-vis des embouts inférieurs 10 des deux assemblages adjacents et les deux autres faces latérales de l'embout inférieur 10 étant exemptes d'élément anti-débris 22.

L'invention s'applique aux embouts inférieurs d'assemblage de combustible nucléaire pour réacteur à eau pressurisée (PWR). De façon plus générale, l'invention s'applique aux embouts inférieurs de tout type d'assemblage de combustible nucléaire.

## Revendications

1. Embout inférieur (10) d'assemblage de combustible nucléaire (2), du type comprenant une plaque (18) ajourée pour permettre le passage d'eau au travers de celle-ci, l'embout possédant des faces latérales (24), et au moins un élément anti-débris (22) disposé sur une face latérale (24) pour bloquer des débris susceptibles de passer entre l'embout inférieur et un autre embout inférieur adjacent,
dans lequel, à l'état libre, le ou chaque élément anti-débris (22) fait saillie en permanence de la face latérale (24) sur laquelle il est disposé, le ou chaque élément anti-débris (22) étant déformable élastiquement de façon à se rétracter en direction de la face latérale (24) en cas d'effort exercé sur l'élément anti-débris (22) en direction de la face latérale (24)
**caractérisé en ce qu'**il comprend une gorge (32) ménagée dans la face latérale (24) de façon que l'élément anti-débris (22) se rétracte dans la gorge (32) en cas d'effort exercé sur l'élément anti-débris (22) en direction de la face latérale (24).

2. Embout inférieur selon la revendication 1, dans lequel l'élément anti-débris (22) est allongé et possède deux portions latérales (42) en appui sur la face latérale (24) et une portion centrale (44) en saillie de la face latérale (24), les portions latérales (42) s'écartant l'une de l'autre en cas d'effort exercé sur l'élément anti-débris (22) en direction de la face latérale (24).

3. Embout inférieur selon la revendication 2, dans lequel les portions latérales (42) sont en appui sur un fond (40) de la gorge (32) de largeur (W2) plus grande que la distance (W3) entre les bords libres des portions latérales (42) de l'élément anti-débris (22) à l'état libre, la portion centrale (44) faisant saillie au travers d'une ouverture (34) de la gorge (32) débouchant sur la face latérale (24).

4. Embout selon la revendication 3, dans lequel l'ouverture (34) possède une largeur (W1) inférieure à ladite distance (W3) entre les bords libres des portions latérales (42) de l'élément anti-débris (22) à l'état libre.

5. Embout selon la revendication 4, dans lequel la gorge (32) est définie par une rainure (36) ménagée dans la face latérale (24) et formant le fond (40) de la gorge (32) et au moins un élément de retenue (38) s'étendant en porte-à-faux à partir d'un bord de la rainure, le bord libre de l'élément de retenue (38) délimitant l'ouverture (34).

6. Embout selon la revendication 5, comprenant deux éléments de retenue (38) s'étendant en porte-à-faux l'un vers l'autre à partir des bords opposés de la rainure (36) et délimitant l'ouverture (34) entre leurs bords libres.

7. Embout selon l'une quelconque des revendications précédentes, comprenant une série d'éléments de retenue (38) espacés mutuellement et répartis le long d'une portion latérale (42) dans le sens de la longueur de l'élément anti-débris (22), chaque élément de retenue (38) maintenant la portion latérale (42) en appui sur la face latérale (24) et permettant un glissement de la portion latérale (42) sur la face latérale (24).

8. Embout selon la revendication 7, dans lequel une portion latérale (42) comprend sur son bord libre des encoches (54) dans lesquelles sont reçus les éléments de retenue (38) assurant le maintien de la portion latérale (42) sur la face latérale (24).

9. Embout selon l'une quelconque des revendications 2 à 8, dans lequel l'élément anti-débris (22) comprend au moins une patte plate prolongeant une portion latérale (42) dans le sens de la longueur de l'élément anti-débris (22) et engagée sous un élément de retenue (38) prévu pour maintenir la portion latérale (42) en appui sur la face latérale (24) tout en permettant un glissement de la portion latérale (42) sur la face latérale (24).

10. Embout selon l'une quelconque des revendications précédentes, dans lequel le ou chaque élément anti-débris (22) comprend des orifices (60) de circulation d'eau au travers de l'élément anti-débris (22).

11. Assemblage de combustible nucléaire comprenant un faisceau de crayons (6) de combustible nucléaire et une ossature (8) de maintien des crayons (6), l'ossature (8) comprenant un embout supérieur (12) et un embout inférieur (10) entre lesquels s'étendent les crayons (6), l'embout inférieur (10) étant un embout inférieur selon l'une quelconque des revendications précédentes.

## Patentansprüche

1. Unteres Endstück (10) zur Montage von nuklearem Brennstoff (2), des Typs aufweisend eine Platte (18), welche gelöchert ist zum Erlauben des Durchlasses von Wasser durch sie hindurch, und wenigstens ein Anti-Partikel-Element (22), das an einer Seitenfläche (24) angeordnet ist zum Blockieren von Partikeln, die in der Lage sind, zwischen das untere Endstück und ein anderes, benachbartes unteres Endstück zu gelangen, wobei, in freiem Zustand, das oder jedes Anti-Partikel-Element (22) permanent von der Seitenfläche (24) vorsteht, an welcher es angeordnet ist, wobei das oder jedes Anti-Partikel-Element (22) elastisch verformbar ist in der Weise, dass es sich in Richtung zu der Seitenfläche (24) zurück verlagert im Falle einer Kraft, die auf das Anti-Partikel-Element (22) in Richtung zu der Seitenfläche (24) ausgeübt wird,
**dadurch gekennzeichnet, dass** es eine Aussparung (32) aufweist, die in der Seitenfläche (24) ausgebildet ist, so dass das Anti-Partikel-Element (22) sich in die Aussparung (32) zurückverlagert im Falle der Kraft, die auf das Anti-Partikel-Element (22) in Richtung zu der Seitenfläche (24) ausgeübt wird.

2. Unteres Endstück gemäß Anspruch 1, wobei das Anti-Partikel-Element (22) langgestreckt ist und zwei Seitenabschnitte (42), die an der Seitenfläche (24) anliegen, und einen Zentralabschnitt (44) besitzt, der von der Seitenfläche (24) vorsteht, wobei die Seitenabschnitte (42) sich voneinander entfernen im Falle der Kraft, die auf das Anti-Partikel-Element (22) in Richtung zu der Seitenfläche (24) ausgeübt wird.

3. Unteres Endstück gemäß Anspruch 2, wobei die Seitenabschnitte (42) an einem Boden (40) der Aussparung (32) aufliegen einer Breite (W2), die größer als die Distanz (W3) zwischen den freien Rändern der Seitenabschnitte (42) des Anti-Partikel-Elements (22) im freien Zustand ist, wobei der Zentralabschnitt (44) durch die Öffnung (34) der Aussparung (32) hindurch vorsteht, die an der Seitenfläche (24) ausmündet.

4. Unteres Endstück gemäß Anspruch 3, wobei die Öffnung (34) eine Weite (W1) hat, die kleiner als die besagte Weite (W3) zwischen den freien Rändern der Seitenabschnitte (42) des Anti-Partikel-Elements (22) im freien Zustand ist.

5. Unteres Endstück gemäß Anspruch 4, wobei die Aussparung (32) von einer Nut (36), die in der Seitenfläche (24) ausgebildet ist und die den Boden (42) der Aussparung (32) bildet, und wenigstens einem Rückhalteelement (38) definiert ist, das sich ausgehend von einem Rand der Nut auskragend erstreckt, wobei der freie Rand des Rückhalteelements (38) die Öffnung (34) begrenzt.

6. Unteres Endstück gemäß Anspruch 5, aufweisend zwei Rückhalteelemente (38), die sich ausgehend von den gegenüberliegenden Rändern der Nut (36) auskragend aufeinander zu erstrecken und die Öffnung (34) zwischen ihren freien Rändern definieren.

7. Unteres Endstück gemäß einem der vorhergehenden Ansprüche, aufweisend eine Serie von Rückhalteelemente (38), die im Abstand voneinander sind und die entlang eines Seitenabschnitts (42) entlang der Länge des Anti-Partikel-Elements (22) verteilt sind, wobei jedes Rückhalteelement (38) den Seitenabschnitt (42) in Anlage an der Seitenfläche (24) hält und ein Gleiten des Seitenabschnitts (42) an der Seitenfläche (24) erlaubt.

8. Unteres Endstück gemäß Anspruch 7, wobei der Seitenabschnitt (42) an seinem freien Rand Auskerbungen (54) aufweist, in denen die Rückhalteelemente (38) aufgenommen sind unter Gewährleisten des Haltens des Seitenabschnitts (42) an der Seitenfläche (24).

9. Unteres Endstück gemäß einem der Ansprüche 2 bis 8, wobei das Anti-Partikel-Element (22) wenigstens eine flache Lasche aufweist, die einen Seitenabschnitt (42) verlängert entlang der Länge des Anti-Partikel-Abschnitts (22) und die unter ein Rückhalteelement (38) eingreift, das vorgesehen ist zum Halten des Seitenabschnitts (42) in Anlage an der Seitenfläche (24), erlaubend ein Gleiten des Seitenabschnitts (42) an der Seitenfläche (24).

10. Unteres Endstück gemäß einem der vorhergehenden Ansprüche, wobei das oder jedes Anti-Partikel-Element (22) Öffnungen (60) aufweist zum Zirkulieren von Wasser durch das Anti-Partikel-Element (22) hindurch.

11. Nuklearbrennstoffbaugruppe aufweisend ein Bündel Kernbrennstäbe (6) und ein Gestell (8) zum Halten der Stäbe (6), wobei das Gestell (8) ein oberes Endstück (12) und ein unteres Endstück (10) aufweist, zwischen denen sich die Stäbe (6) erstrecken, wobei das untere Endstück (10) ein unteres Endstück gemäß einem der vorhergehenden Ansprüche ist.

## Claims

1. A nuclear fuel assembly (2) bottom nozzle (10), of the type comprising a perforated plate (18) to allow water to pass through it, the nozzle having lateral faces (24), and at least one anti-debris element (22) positioned on a lateral face (24) to block out debris likely to infiltrate between the bottom nozzle and another adjacent bottom nozzle,
wherein, in the free state, the or each anti-debris element (22) permanently projects from the lateral face (24) on which it is positioned, the or each anti-debris element (22) being elastically deformable so as to retract towards the lateral face (24) in the event of a force being exerted on the anti-debris element (22) towards the lateral face (24),
**characterized in that** it comprises a groove (32) formed in the lateral face (24) such that the anti-debris element (22) retracts into the groove (32) in the event of a force being exerted on the anti-debris element (22) towards the lateral face (24).

2. The bottom nozzle according to claim 1, wherein the anti-debris element (22) is elongated and has two lateral portions (42) bearing on the lateral face (24) and a central portion (44) protruding from the lateral face (24), the lateral portions (42) moving away from each other in the event of a force being exerted on the anti-debris element (22) towards the lateral face (24).

3. The bottom nozzle according to claim 2, wherein the lateral portions (42) are bearing on a bottom (40) of the groove (32) with a width (W2) larger than the distance (W3) between the free edges of the lateral portions (42) of the anti-debris element (22) in the free state, the central portion (44) protruding through an opening (34) of the groove (32) emerging on the lateral face (24).

4. The nozzle according to claim 3, wherein the opening (34) has a width (W1) smaller than said distance (W3) between the free edges of the lateral portions (42) of the anti-debris element (22) in the free state.

5. The nozzle according to claim 4, wherein the groove (32) is defined by a slot (36) formed in the lateral face (24) and forming the bottom (40) of the groove (32) and at least one retention element (38) extending overhanging from one edge of the slot, the free end of the retention element (38) defining the opening (34).

6. The nozzle according to claim 5, comprising two retention elements (38) extending overhanging one another from opposite edges of the slot (36) and defining the opening (34) between their free edges.

7. The nozzle according to any one of the preceding claims, comprising a series of retention elements (38) spaced apart and distributed along a lateral portion (42) in the direction of the length of the anti-debris element (22), each retention element (38) keeping the lateral portion (42) bearing on the lateral face (24) and allowing sliding of the lateral portion (42) on the lateral face (24).

8. The nozzle according to claim 7, wherein a lateral portion (42) comprises, on its free edge, notches (54) in which the retention elements (38) ensuring the retention of the lateral portion (42) on the lateral face (24) are received.

9. The nozzle according to any one of claims 2 to 8, wherein the anti-debris element (22) comprises at least one flat lug extending a lateral portion (42) in the direction of the length of the anti-debris element (22) and engaged under a retention element (38) provided to keep the lateral portion (42) bearing against the lateral face (24) while allowing sliding of the lateral portion (42) on the lateral face (24).

10. The nozzle according to any one of the preceding claims, wherein the or each anti-debris element (22) comprises orifices (60) for the circulation of water through the anti-debris element (22).

11. A nuclear fuel assembly comprising a bundle of nuclear fuel rods (6) and a maintenance frame (8) of the rods (6), the frame (8) comprising an upper nozzle (12) and a lower nozzle (10) between which the rods (6) extend, the lower nozzle (10) being a lower nozzle according to any one of the preceding claims.
